# EUROPEAN PATENT SPECIFICATION

(11) **EP 3 249 009 B1**
(45) Date of publication and mention of the grant of the patent: **23.06.2021**
(21) Application number: 16171729.3
(22) Date of filing: 27.05.2016
(51) Int. Cl.: C08L 23/08

(54) **POLYMER COMPOSITION FOR FILMS HAVING IMPROVED PHOTOSYNTHETICALLY ACTIVE RADIATION (PAR) PERFORMANCE**
POLYMERZUSAMMENSETZUNG FÜR FOLIEN MIT VERBESSERTER FOTOSYNTHETISCH AKTIVER STRAHLUNGSLEISTUNG (PAR)
COMPOSITION POLYMÈRE POUR FILMS POSSÉDANT DES PERFORMANCES AMÉLIORÉES D'UN RAYONNEMENT PHOTOSYNTHÉTIQUEMENT ACTIF (PAR)

(43) Date of publication of application: 29.11.2017
(73) Proprietor: ABU DHABI POLYMERS CO. LTD (BOROUGE) L.L.C., Abu Dhabi (AE); Borealis AG, 1220 Vienna (AT)
(72) Inventor: ORN, Lars, 43136 Molndal (SE); GALIATSATOS, Vassilios, Lebanon, OH Ohio 45036 (US); QUDAIH, Rana, Abu Dhabi (AE)
(74) Representative: Maiwald Patent- und Rechtsanwaltsgesellschaft mbH

(56) References cited:
- JIANG, HAI BIN ET AL: "Different influences of nucleating agents on crystallization behavior of polyethylene and polypropylene", SCIENCE CHINA: CHEMISTRY, vol. 55, no. 6, 19 March 2012 (2012-03-19) , pages 1140-1147, XP002759850, ISSN: 1869-1870, DOI: 10.1007/S11426-012-4516-Y
- None

## Description

The present invention relates to the use of a polymer composition for agricultural films having improved Photosynthetically Active Radiation (PAR) performance, particularly greenhouse films..

Plastic films are used extensively in agriculture in order to improve plant yield. Frequently, ethylene-based polymer films are employed for this purpose, in particular for greenhouses, tunnels as well as mulching. Typical examples of known ethylene polymer films employed in this application are LDPE (low density polyethylene) films as well as EVA (ethylene-vinyl acetate) films. These materials typically are employed in the form of single layer films of varying thickness, typically from 100 to 250 µm. The requirements for such films are various and not all types of films are able to satisfy the needs with respect to all required properties.

Typical requirements for agricultural films are as follows:
a) They should have high strength and toughness so that they can be put into place without the danger of breakage while, at the same time, enabling also the use under demanding weather conditions, such as strong winds, heavy rainfall, etc.
b) They should provide good resistance against UV degradation as well as against pesticides.
c) They should provide high light transmission, for direct light (clear sky) as well as for diffuse light (cloudy weather), so that the required light transmission for plant growth is possible under sun light with a clear sky as well as with a cloudy sky.
d) They should provide for a rather low IR transmission in order to achieve thermal stability inside the greenhouse e.g. to balance the temperature extremes between hot days and cold nights.
e) They should provide a suitably high scattering of the light transmission, i.e., they should provide a rather diffusive effect in order to decrease direct light impact on young plants while avoiding at the same time sharp shadows excluding certain areas under the film from light transmission.
f) They should provide protection against harmful UV radiation, i.e., they should absorb at least a portion of the natural UV radiation.

As indicated above, direct sunlight through greenhouse coverage, i.e., non-scattered light, can be harmful to young plants. At the same time, direct sunlight also produces sharp shadows preventing light from reaching all parts of the growing crop within a greenhouse. A film showing a higher haze accordingly is usually advantageous in view of the fact that such a film diffuses the incoming light, however at the same time, it is of course important that light transmission is enabled in the photosynthetically active radiation (PAR) range which is a wavelength of from 400 to 700 nm in order to improve the growth rate of the crop within the greenhouse. Hence, the haze should not impair the overall transmission of the sunlight through the film.

Prior art film materials have inter alia a drawback that they show low degree of scattering, i.e. they have low or no diffusive effect. EVA furthermore is a relatively expensive material limiting its use in agricultural films. In order to improve the scattering effect of agricultural films, mineral fillers have been widely employed, as well as the coating of the film with a paint. This, however, disadvantageously lowers the light transmission of the light in the PAR and, at the same time, also reduces the mechanical strength of the films.

An optimal film for agricultural use accordingly should combine as much of the advantageous properties indicated above and such a film at least should combine high transmission of both direct light and diffuse light, in the photoactive range (PAR) while, at the same time, providing a sufficient mechanical strength.

It has been surprisingly found that by using a specific nucleating agent in combination with a bimodal LLDPE, films can be formed having a property profile desirable for agricultural films.

Accordingly, the present invention provides a use of a polymer composition comprising
a) a bi- or multimodal LLDPE, preferably bimodal LLDPE,
b) a compound according to the following formula (I) 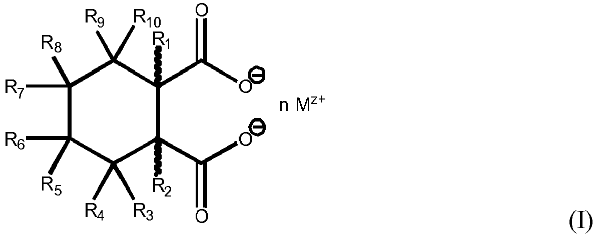 wherein
   each of R₁, R₂, R₃, R₄, R₅, R₆, R₇, R₈, R₉ and R₁₀ is independently selected from hydrogen and a C₁ to C₁₀ hydrocarbyl group;
   whereby two of R₃ to R₁₀ located on adjacent carbon atoms may be fused to form a cyclic hydrocarbyl structure;
   M is selected from the groups consisting of calcium, strontium, lithium, zinc, magnesium and monobasic aluminium ;
   n is 1 or 2;
   z is 1 or 2;
   the sum of n+z is 3,
   wherein the film has a hemispherical PAR transmittance of at least 80% and a F-scatter value of not more than 64%,
   as an agricultural film.

The polymer composition of the film used in the present invention enables to produce films having lower haze, decreased F-scatter value and improved hemispherical PAR (photosynthetically active radiation) transmittance. The hemispherical PAR transmittance is a measure for the transmittance of light in the PAR range having a uniform luminance which remains unchanged with altitude and azimuth. Normal incident sunlight has a hemispherical part and a direct part, the latter being the light coming directly from the sun, i.e. which is not diffused by the atmosphere etc. Especially in northern regions the light in a greenhouse is mainly light originating from the hemispherical part of the sunlight and, thus, improvement of the hemispherical transmittance is desired.

In the present invention the term "hydrocarbyl" denotes a monovalent residue consisting of carbon and hydrogen atoms only.

In compound (I) each of R₁, R₂, R₃, R₄, R₅, R₆, R₇, R₈, R₉ and R₁₀ is preferably independently selected from hydrogen and a C₁ to C₁₀ alkyl group, more preferably hydrogen and a C₁ to C₄ alkyl group, even more preferably from hydrogen and a C₁ or C₂ alkyl group.

Preferably, the total number of carbon atoms present in R₁ to R₁₀ is 50 or below, more preferably 35 or below and most preferably 20 or below.

In a preferred embodiment, each of R₁, R₂, R₃, R₄, R₅, R₆, R₇, R₈, R₉ and R₁₀ is hydrogen or a methyl group, and in a particularly preferred embodiment each of R₁, R₂, R₃, R₄, R₅, R₆, R₇, R₈, R₉ and R₁₀ is hydrogen.

In case in the compound according to formula (I) two of R₃ to R₁₀ located on adjacent carbon atoms are fused to form a cyclic hydrocarbyl structure, the cyclic hydrocarbyl structure is preferably a five to eight-membered ring, more preferably a five or six-membered ring. The cyclic hydrocarbyl structure, if present, may be an aliphatic cylic hydrocarbyl structure or an aromatic cylic hydrocarbyl structure, and is preferably an aliphatic cylic hydrocarbyl structure. Usually, the cylic hydrocarbyl structure, if present, comprises 5 to 12 carbon atoms.

However, preferably, the compound according to formula (I) does not comprise such cyclic structures.

As to n and z, both of them may be is 1 or 2, and the sum of n+z is 3. Preferably, n is 1 and z is 2.

As outlined above, M is selected from the groups consisting of calcium, strontium, lithium, zinc, magnesium and monobasic aluminium, preferably M is selected from calcium, and magnesium. In a preferred embodiment M is calcium.

Preferably the amount of compounds according to formula (I) is within the range of 500 to 8000 ppm, more preferably within the range of 750 to 7000 ppm, even more preferably within the range of 1010 to 6000 ppm and even more preferably within the range of 1200 to 5000 ppm, most preferably within the range of 1300 to 4000 ppm, based on the total amount of the polymer composition.

The compound according to formula (I) acts as a nucleating agent in the polymer composition of the film used according to the present invention. Nucleating agents provide nucleation sites for crystal growth during cooling of a thermoplastic molten formulation. The presence of such nucleation sites results in a larger number of crystals, which, in turn are smaller. As a result of the smaller crystals formed therein, usually clarification of the target thermoplastic may be achieved. Therefore, nucleating agents are sometimes also referred to as clarifiers. However, clarification may also be achieved without nucleation, i.e. not all clarifiers are necessarily nucleating agents.

Preferably, the total amount of nucleating agents and clarifiers in the composition of the film used according to the present invention including the compounds of formula (I) is 1010 to 10000 ppm based on the total amount of the polymer composition, more preferably 1300 to 4000 ppm based on the total amount of the polymer composition.

The polymer composition of the film used according to the invention may further comprise a fatty acid salt, usually the fatty acid salt of a metal, e.g. an alkaline metal, an alkaline earth metal and/or zinc.

Fatty acids are known to the person skilled in the art. Fatty acids having 6 to 21 carbon atoms are preferred whereby fatty acids having 12 to 21 carbon atoms are particularly preferred.

Non-limiting examples for suitable fatty acid salts are stearates of metals, e.g. alkaline metals, alkaline earth metals and/or zinc, particularly zinc stearate or calcium stearate.

The total amount of fatty acid salts, if present, is preferably within the range of 250 to 4000 ppm, more preferably within the range of 375 to 3500 ppm, even more preferably within the range of 505 to 3000 ppm and even more preferably within the range of 600 to 2500 ppm, most preferably within the range of 650 to 2000 ppm, based on the total amount of the polymer composition.

In case fatty acids are present, preferably the weight ratio of the compound according to formula (I) to the total amount of fatty acid(s) is within the range of 0.5:1 to 5:1, preferably within the range of 1:1 to 3:1.

Further nucleating agents and/or clarifiers besides the compounds according to formula (I) and the fatty acid salts, if present, may be used in the polymer composition of the film used in the present invention. In case they are used, their amount is usually below 300 ppm based on the total amount of the polymer composition.

In one embodiment the only nucleating agents and clarifiers present in the polymer composition of the film used according to the present invention are the compounds according to formula (I), and the fatty acid salts, if present.

The term LLDPE denotes a linear low density polyethylene.

The density of the a bi- or multimodal LLDPE is preferably 940 kg/m³ or less, more preferably within the range of 890 to 935 kg/m³ such as 910 to 930 kg/m³ or even more preferably in the range of 920 to 930 kg/m³.

The comonomer(s) of the a bi- or multimodal LLDPE is/are selected from C₄ to C₂₀ alpha olefins, preferably the comonomer(s) is/are selected from C₄ to C₁₀ alpha olefins, more preferably C₄ to C₈ alpha olefins, e.g. butene, hexene, octene.

The comonomer in the bi- or multimodal LLDPE is preferably 1 to 20 wt%, more preferably 3-15 wt%, even more preferably 5-12 wt%, based on the total weight of the bi- or multimodal LLDPE.

The LLDPE used in the polymer composition of the film used in the present invention is bimodal or multimodal, i.e. its molecular weight profile does not comprise a single peak but instead comprises the combination of two or more peaks centred about different average molecular weights as a result of the fact that the polymer comprises two or more separately produced components. Such bi- or multimodal polymers may be prepared for example by two or more stage polymerization or by the use of two or more different polymerization catalysts in a one stage polymerization. Preferably however they are produced by a two-or more stage polymerization process using the same catalyst, e.g. a metallocene catalyst or Ziegler-Natta catalyst, in particular a slurry polymerization in a loop reactor followed by gas phase polymerization in one or more gas phase reactor(s). Preferably a bimodal LLDPE is produced using a two-stage polymerisation process, wherein a slurry polymerization in a loop reactor followed by a gas phase polymerization in a gas phase reactor is used to produce the LLDPE used in the present invention.

Such a bimodal LLDPE consists of a low molecular weight (LMW) fraction and a high molecular weight (HMW) fraction, the HMW fraction has a higher weight average molecular weight M_{w} than the LMW fraction.

As outlined above, preferably the bimodal LLDPE is produced using a two-stage polymerisation process with a slurry polymerization in a loop reactor followed by a gas phase polymerization in a gas phase reactor. Preferable the LMW fraction is produced in the loop reactor and the HMW fraction in the subsequent gas phase reactor in the presence of the LMW fraction using the same catalyst.

It is preferred to continuously or intermittently introduce the procatalyst, cocatalyst, ethylene, hydrogen, optionally comonomer and diluent (typically an inert aliphatic hydrocarbon, preferably isobutane or propane) into the loop reactor, withdraw the slurry continuously or intermittently from the loop reactor, pass it into a separation stage to remove at least part of the hydrocarbons, and direct the first polymer component into the gas phase reactor, together with additional ethylene, comonomer and optionally hydrogen and an eventual inert gas to produce the second copolymer component. The resulting copolymer composition is then withdrawn from the gas phase reactor, either continuously or intermittently.

It should be understood that the multi-step process described above may include additional precontacting or prepolymerisation stages, where the catalyst is pre-treated or prepolymerised before it is introduced into the first polymerization stage. A process including a prepolymerisation stage has been described in WO-A-96/18662. The temperature in the prepolymerization step is typically from 0 to 90°C, preferably from 20 to 70 °C and more preferably from 30 to 60°C. The pressure is not critical and is typically from 1 to 150 bar, preferably from 10 to 100 bar.

In the polymerization process, said C₃-C₁₂ α-olefin monomer may be any monomer having from three to thirteen carbon atoms, such as propylene, 1- butene, isobutene, 3-methyl-1-butene, 1-hexene, 4-methyl-1-pentene, 4,4- dimethyl-1-pentene, vinylcyclohexane, cyclopentene, cyclobutene and norbornene. Most preferably, said C₃-C₁₂ α-olefin monomer is a C₃-C₁₀- α-olefin, like a C₃-C₇- α-olefin or C₃-C₅- α-olefin. For example, said C₃-C₁₂ α-olefin monomer is 1- butene or 1-hexene.

A loop reactor - gas phase reactor system is marketed by Borealis A/S, Denmark as a BORSTAR reactor system.

The bi- or multimodal LLDPE may comprise more than one comonomer, e.g. different comonomers may be used in each stage of a multi-stage polymerisation process. However, preferably, the bi- or multimodal LLDPE according to the present invention comprises only one comonomer.

The melt flow rate MFR₂ (ISO 1133, 190°C, 2.16 kg load) of the bi- or multimodal LLDPE, preferably bimodal LLDPE, is preferably within the range 0.05 to 25, preferably 0.10 to 15, e.g. 0.10 to 10 g/10min or 0.15 to 5.0 g/10 min. The MFR₂₁ (ISO 1133, 190°C, 21.6 kg load) of the LLDPE should preferably be in the range 10 to 100 g/10min, more preferably within the range of 10 to 50 g/10 min, e.g.15 to 30.

The LMW fraction of the bi- or multimodal, preferably bimodal LLDPE, preferably has an MFR₂ (ISO 1133, 190°C, 2.16 kg load) of 50 to 700 g/10min, preferably 100 to 450 g/10min. The weight average molecular weight M_{w} of the LMW fraction is preferably within the range from 20,000 to 50,000 g/mol, e.g. 25,000 to 40,000 g/mol. Preferred molecular weight distribution values for the low molecular weight component range from 3 to 15, e.g. 5 to 12.

The weight average molecular weight M_{w} of the bi- or multimodal LLDPE, preferably bimodal LLDPE, is preferably 75,000 to 400,000 g/mol, more preferably 125,000 to 300,000 g/mol.

The molecular weight distribution values for the bi- or multimodal LLDPE, preferably bimodal LLDPE, preferably range from 5 to 25, more preferably range from 10 t0 20.

The density of the lower molecular weight component of the bi- or multimodal LLDPE, preferably bimodal LLDPE, is preferably within the range of 930 to 970 kg/m³, preferably from 945 to 970 kg/m³.

The lower molecular weight component of the bi- or multimodal LLDPE, preferably bimodal LLDPE, preferably forms 35 to 45% by weight of the LLPDE with the higher molecular weight component forming 55 to 65% by weight.

The bi- or multimodal LLDPE, preferably bimodal LLDPE may be made using conventional single site or Ziegler-Natta catalysis as is known in the art. Conventional cocatalysts, supports/carriers, electron donors etc. can be used.

A suitable and preferable catalyst is as follows.
The preferred polymerisation catalyst contains a magnesium compound, an aluminium compound and a titanium compound supported on a particulate support.

The particulate support can be an inorganic oxide support, such as silica, alumina, titania, silica-alumina and silica-titania. Preferably, the support is silica.

The average particle size of the silica support can be typically from 10 to 100 µm. However, it has turned out that special advantages can be obtained if the support has an average particle size from 15 to 30 µm, preferably from 18 to 25 µm. Especially it has been found out that the average particle size of the polymer produced in the process of the invention is the same irrespective whether the catalyst is prepared on a 20 µm support or on a 40 µm support. In fact, the fraction of fine polymer particles has been found to be lower if a support having an average particle size of 20 µm is used. The reduction of the fine polymer reduces the risk of plugging and thus contributes to a stable process operation. This, on the other hand, helps to produce polymer films with a good homogeneity. Examples of suitable support materials are, for instance, ES747JR produced and marketed by Ineos Silicas (former Crossfield), and SP9-491, produced and marketed by Grace.

The magnesium compound is a reaction product of a magnesium dialkyl and an alcohol. The alcohol is a linear or branched aliphatic monoalcohol. Preferably, the alcohol has from 6 to 16 carbon atoms. Branched alcohols are especially preferred, and 2-ethyl-1-hexanol is one example of the preferred alcohols. The magnesium dialkyl may be any compound of magnesium bonding to two alkyl groups, which may be the same or different. Butyl-octyl magnesium is one example of the preferred magnesium dialkyls.

The aluminium compound is chlorine containing aluminium alkyl. Especially preferred compounds are aluminium alkyl dichlorides and aluminium alkyl sesquichlorides.

The titanium compound is a halogen containing titanium compound, preferably chlorine containing titanium compound. Especially preferred titanium compound is titanium tetrachloride.

The catalyst can be prepared by sequentially contacting the carrier with the above mentioned compounds, as described in EP-A-688794. Alternatively, it can be prepared by first preparing a solution from the components and then contacting the solution with a carrier, as described in WO-A-01/55230.
Further suitable catalysts are described in EP 2 799 456.

The above mentioned solid catalyst component is contacted with an aluminium alkyl cocatalyst, which preferably is an aluminium trialkyl compound, after which it can be used in polymerisation. The contacting of the solid catalyst component and the aluminium alkyl cocatalyst can either be conducted prior to introducing the catalyst into the polymerisation reactor, or it can be conducted by introducing the two components separately into the polymerisation reactor.

The bi- or multimodal LLDPE, preferably bimodal LLDPE, preferably makes up at least 90 wt.%, more preferably at least 95 wt.% and most preferably at least 98 wt.% of the polymer composition of the film used according to the present invention.

In a particularly preferred embodiment, the bi- or multimodal LLDPE, preferably bimodal LLDPE, according to the present invention, is the only polymer present in the polymer composition of the film used according to the present invention, except for optional polymers used as carriers of additives. The optional polymer used as carriers of additives is preferably PE, more preferably LDPE or LLDPE. Their amount is usually not more than 10 wt.% based on the entirety of polymers present in the composition.

The preferred features defined above also apply to the preferred compositions outlined in the following.

The polymer composition may comprise
a) at least 90 wt.% a bi- or multimodal LLDPE, preferably bimodal LLDPE, having a density of 940 kg/m³ or less and
b) 500 to 8000 ppm, more preferably within the range of 750 to 7000 ppm, even more preferably within the range of 1010 to 6000 ppm and even more preferably within the range of 1200 to 5000 ppm, most preferably within the range of 1300 to 4000 ppm, based on the total amount of the polymer composition of a compound according to the following formula (I) 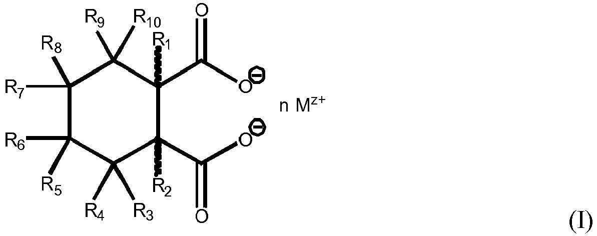 wherein
   each of R₁, R₂, R₃, R₄, R₅, R₆, R₇, R₈, R₉ and R₁₀ is independently selected from hydrogen and a C₁ to C₁₀ alkyl group;
   whereby two of R₃ to R₁₀ located on adjacent carbon atoms may be fused to form a cyclic hydrocarbyl structure;
   M is selected from the groups consisting of calcium, strontium, lithium, zinc, magnesium;
   n is 1 or 2;
   z is 1 or 2;
   the sum of n+z is 3.

The polymer composition may alternatively comprise
a) at least 90 wt.% of a bi- or multimodal LLDPE, preferably bimodal LLDPE, having a density of 890 to 935 kg/m³ and
b) 500 to 8000 ppm, more preferably within the range of 750 to 7000 ppm, even more preferably within the range of 1010 to 6000 ppm and even more preferably within the range of 1200 to 5000 ppm, most preferably within the range of 1300 to 4000 ppm, based on the total amount of the polymer composition of a compound according to the following formula (I) 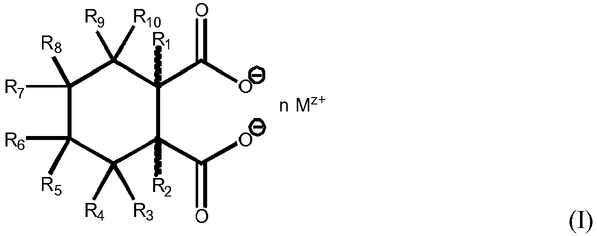 wherein
   each of R₁, R₂, R₃, R₄, R₅, R₆, R₇, R₈, R₉ and R₁₀ is independently selected from hydrogen and a C₁ to C₄ alkyl group;
   M is selected from the groups consisting of calcium, strontium, lithium, zinc, magnesium;
   n is 1 or 2;
   z is 1 or 2;
   the sum of n+z is 3.

The polymer composition may alternatively comprise
a) at least 90 wt.% of a bi- or multimodal LLDPE, preferably bimodal LLDPE, having a density of 910 to 930 kg/m³ and
b) 500 to 8000 ppm, more preferably within the range of 750 to 7000 ppm, even more preferably within the range of 1010 to 6000 ppm and even more preferably within the range of 1200 to 5000 ppm, most preferably within the range of 1300 to 4000 ppm , based on the total amount of the polymer composition of a compound according to the following formula (I) 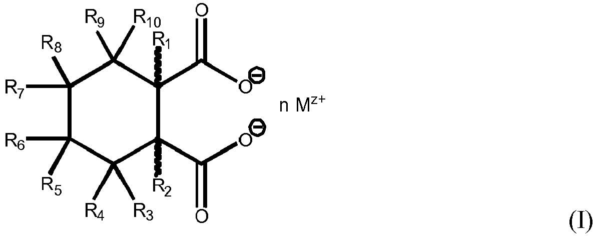 wherein
   each of R₁, R₂, R₃, R₄, R₅, R₆, R₇, R₈, R₉ and R₁₀ is independently selected from hydrogen and a C₁ to C₄ alkyl group;
   M is selected from the groups consisting of calcium, strontium, lithium, zinc, magnesium;
   n is 1 or 2;
   z is 1 or 2;
   the sum of n+z is 3.

The polymer composition may alternatively comprise
a) at least 95 wt.% of a bi- or multimodal LLDPE, preferably bimodal LLDPE, having a density of 910 to 930 kg/m³ and
b) 750 to 7000 ppm, preferably within the range of 1010 to 6000 ppm and more preferably within the range of 1200 to 5000 ppm, most preferably within the range of 1300 to 4000 ppm, based on the total amount of the polymer composition of a compound according to the following formula (I) 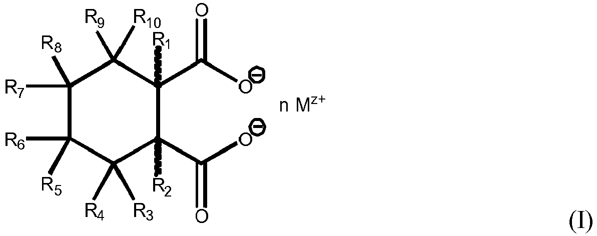 wherein
   each of R₁, R₂, R₃, R₄, R₅, R₆, R₇, R₈, R₉ and R₁₀ is independently selected from hydrogen or a methyl group;
   M is selected from the groups consisting of calcium and magnesium;
   n is 1;
   z is 2.

The polymer composition may alternatively comprise
a) at least 95 wt.% of a bimodal LLDPE, having a density of 890 to 935 kg/m³ such as 910 to 930 kg/m³ or even 920 to 930 kg/m³; and
b) 750 to 7000 ppm, preferably within the range of 1010 to 6000 ppm and more preferably within the range of 1200 to 5000 ppm, most preferably within the range of 1300 to 4000 ppm, based on the total amount of the polymer composition of a compound according to the following formula (I) 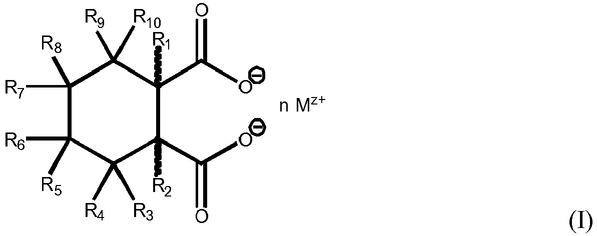 wherein
   each of R₁, R₂, R₃, R₄, R₅, R₆, R₇, R₈, R₉ and R₁₀ is independently selected from hydrogen or a methyl group;
   M is selected from the groups consisting of calcium and magnesium;
   n is 1;
   z is 2.

The polymer composition may alternatively comprise
a) at least 98 wt.% of a bimodal LLDPE, having a density of 910 to 930 kg/m³ such as 920 to 930 kg/m³; and
b) 1200 to 5000 ppm, preferably within the range of 1300 to 4000 ppm, based on the total amount of the polymer composition of a compound according to the following formula (I) 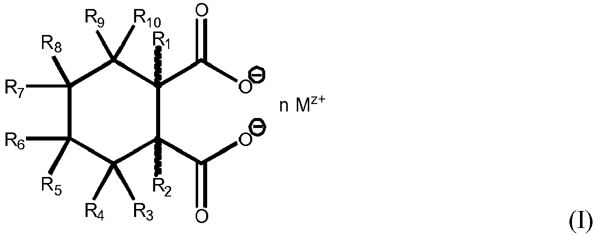 wherein
   each of R₁, R₂, R₃, R₄, R₅, R₆, R₇, R₈, R₉ and R₁₀ is independently selected from hydrogen or a methyl group, preferably each of R₁, R₂, R₃, R₄, R₅, R₆, R₇, R₈, R₉ and R₁₀ is hydrogen;
   M is calcium;
   n is 1;
   z is 2.

The polymer composition may alternatively comprise
a) at least 98 wt.% of a bimodal LLDPE having a density of 910 to 930 kg/m³ such as 920 to 930 kg/m³ consisting of 35 to 45 % by weight of a low molecular weight (LMW) fraction and of 55 to 65 % by weight of a high molecular weight (HMW) fraction, the HMW fraction having a higher weight average molecular weight M_{w} than the LMW fraction; and
b) 1200 to 5000 ppm, preferably within the range of 1300 to 4000 ppm, based on the total amount of the polymer composition of a compound according to the following formula (I) 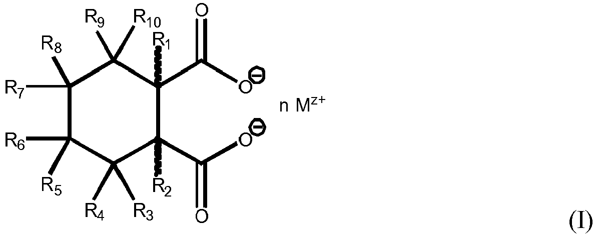 wherein
   each of R₁, R₂, R₃, R₄, R₅, R₆, R₇, R₈, R₉ and R₁₀ is hydrogen;
   M is calcium;
   n is 1;
   z is 2.

The polymer composition may comprise
a) at least 90 wt.% a bi- or multimodal LLDPE, preferably bimodal LLDPE, having a density of 940 kg/m³ or less and
b) 500 to 8000 ppm, more preferably within the range of 750 to 7000 ppm, even more preferably within the range of 1010 to 6000 ppm and even more preferably within the range of 1200 to 5000 ppm, most preferably within the range of 1300 to 4000 ppm, based on the total amount of the polymer composition of a compound according to the following formula (I) 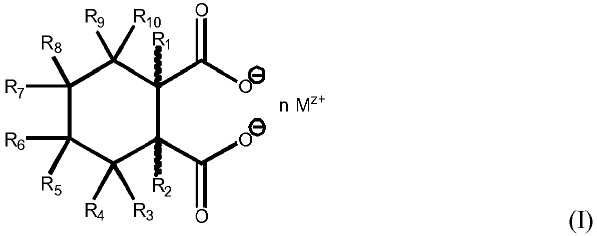 wherein
   each of R₁, R₂, R₃, R₄, R₅, R₆, R₇, R₈, R₉ and R₁₀ is independently selected from hydrogen and a C₁ to C₁₀ alkyl group;
   whereby two of R₃ to R₁₀ located on adjacent carbon atoms may be fused to form a cyclic hydrocarbyl structure;
   M is selected from the groups consisting of calcium, strontium, lithium, zinc, magnesium;
   n is 1 or 2;
   z is 1 or 2;
   the sum of n+z is 3
   further comprising 250 to 4000 ppm, more preferably within the range of 375 to 3500 ppm, even more preferably within the range of 505 to 3000 ppm and even more preferably within the range of 600 to 2500 ppm, most preferably within the range of 650 to 2000 ppm, based on the total amount of the polymer composition of the fatty acid salt of a metal, e.g. an alkaline metal, an alkaline earth metal and/or zinc, such as calcium or zinc.

The polymer composition may alternatively comprise
a) at least 90 wt.% of a bi- or multimodal LLDPE, preferably bimodal LLDPE, having a density of 890 to 935 kg/m³ and
b) 500 to 8000 ppm, more preferably within the range of 750 to 7000 ppm, even more preferably within the range of 1010 to 6000 ppm and even more preferably within the range of 1200 to 5000 ppm, most preferably within the range of 1300 to 4000 ppm, based on the total amount of the polymer composition of a compound according to the following formula (I) 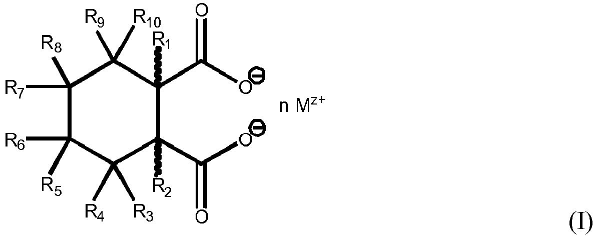 wherein
   each of R₁, R₂, R₃, R₄, R₅, R₆, R₇, R₈, R₉ and R₁₀ is independently selected from hydrogen and a C₁ to C₄ alkyl group;
   M is selected from the groups consisting of calcium, strontium, lithium, zinc, magnesium;
   n is 1 or 2;
   z is 1 or 2;
   the sum of n+z is 3
   further comprising 250 to 4000 ppm, more preferably within the range of 375 to 3500 ppm, even more preferably within the range of 505 to 3000 ppm and even more preferably within the range of 600 to 2500 ppm, most preferably within the range of 650 to 2000 ppm, based on the total amount of the polymer composition of the fatty acid salt of a metal, e.g. an alkaline metal, an alkaline earth metal and/or zinc, such as calcium or zinc, the fatty acid having 6 to 21 carbon atoms.

The polymer composition may alternatively comprise
a) at least 90 wt.% of a bi- or multimodal LLDPE, preferably bimodal LLDPE, having a density of 910 to 930 kg/m³ and
b) 500 to 8000 ppm, more preferably within the range of 750 to 7000 ppm, even more preferably within the range of 1010 to 6000 ppm and even more preferably within the range of 1200 to 5000 ppm, most preferably within the range of 1300 to 4000 ppm, based on the total amount of the polymer composition of a compound according to the following formula (I) 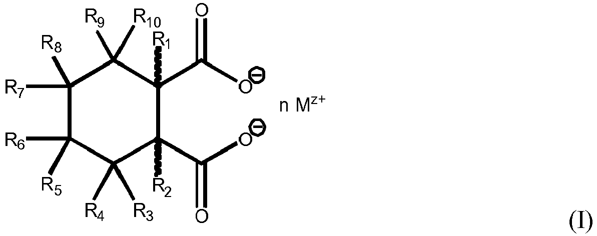 wherein
   each of R₁, R₂, R₃, R₄, R₅, R₆, R₇, R₈, R₉ and R₁₀ is independently selected from hydrogen and a C₁ to C₄ alkyl group;
   M is selected from the groups consisting of calcium, strontium, lithium, zinc, magnesium;
   n is 1 or 2;
   z is 1 or 2;
   the sum of n+z is 3
   further comprising 250 to 4000 ppm, more preferably within the range of 375 to 3500 ppm, even more preferably within the range of 505 to 3000 ppm and even more preferably within the range of 600 to 2500 ppm, most preferably within the range of 650 to 2000 ppm, based on the total amount of the polymer composition of the fatty acid salt of a metal, e.g. an alkaline metal, an alkaline earth metal and/or zinc, such as calcium or zinc, the fatty acid having 12 to 21 carbon atoms.

The polymer composition may alternatively comprise
a) at least 95 wt.% of a bi- or multimodal LLDPE, preferably bimodal LLDPE, having a density of 890 to 935 kg/m³ and
b) 500 to 8000 ppm, more preferably within the range of 750 to 7000 ppm, even more preferably within the range of 1010 to 6000 ppm and even more preferably within the range of 1200 to 5000 ppm, most preferably within the range of 1300 to 4000 ppm, based on the total amount of the polymer composition of a compound according to the following formula (I) 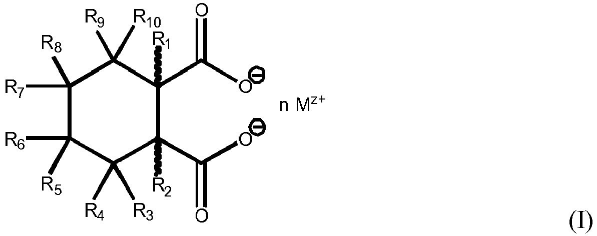 wherein
   each of R₁, R₂, R₃, R₄, R₅, R₆, R₇, R₈, R₉ and R₁₀ is independently selected from hydrogen or a methyl group;
   M is selected from the groups consisting of calcium and magnesium;
   n is 1;
   z is 2
   further comprising 250 to 4000 ppm, more preferably within the range of 375 to 3500 ppm, even more preferably within the range of 505 to 3000 ppm and even more preferably within the range of 600 to 2500 ppm, most preferably within the range of 650 to 2000 ppm, based on the total amount of the polymer composition of the stearate salt of a metal, e.g. an alkaline metal, an alkaline earth metal and/or zinc, such as calcium or zinc.

The polymer composition may alternatively comprise
a) at least 95 wt.% of a bimodal LLDPE, having a density of 890 to 935 kg/m³ such as 910 to 930 kg/m³ or even 920 to 930 kg/m³; and
b) 1010 to 6000 ppm and even more preferably within the range of 1200 to 5000 ppm, most preferably within the range of 1300 to 4000 ppm, based on the total amount of the polymer composition of a compound according to the following formula (I) 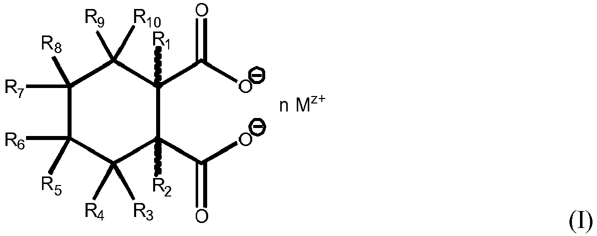 wherein
   each of R₁, R₂, R₃, R₄, R₅, R₆, R₇, R₈, R₉ and R₁₀ is independently selected from hydrogen or a methyl group;
   M is selected from the groups consisting of calcium and magnesium;
   n is 1;
   z is 2
   further comprising 505 to 3000 ppm and even more preferably within the range of 600 to 2500 ppm, most preferably within the range of 650 to 2000 ppm, based on the total amount of the polymer composition of the stearate salt of zinc and/or calcium.

The polymer composition may alternatively comprise
a) at least 98 wt.% of a bimodal LLDPE, having a density of 910 to 930 kg/m³ such as 920 to 930 kg/m³; and
b) 1200 to 5000 ppm, preferably within the range of 1300 to 4000 ppm, based on the total amount of the polymer composition of a compound according to the following formula (I) 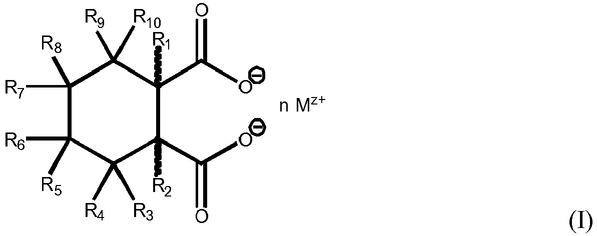 wherein
   each of R₁, R₂, R₃, R₄, R₅, R₆, R₇, R₈, R₉ and R₁₀ is independently selected from hydrogen or a methyl group, preferably each of R₁, R₂, R₃, R₄, R₅, R₆, R₇, R₈, R₉ and R₁₀ is hydrogen;
   M is calcium;
   n is 1;
   z is 2
   further comprising 600 to 2500 ppm, most preferably within the range of 650 to 2000 ppm, based on the total amount of the polymer composition of the stearate salt of zinc and/or calcium.

The polymer composition may alternatively comprise
a) at least 98 wt.% of a bimodal LLDPE having a density of 910 to 930 kg/m³ such as 920 to 930 kg/m³ consisting of 35 to 45 % by weight of a low molecular weight (LMW) fraction and of 55 to 65 % by weight of a high molecular weight (HMW) fraction, the HMW fraction having a higher weight average molecular weight M_{w} than the LMW fraction; and
b) 1200 to 5000 ppm, preferably within the range of 1300 to 4000 ppm, based on the total amount of the polymer composition of a compound according to the following formula (I) 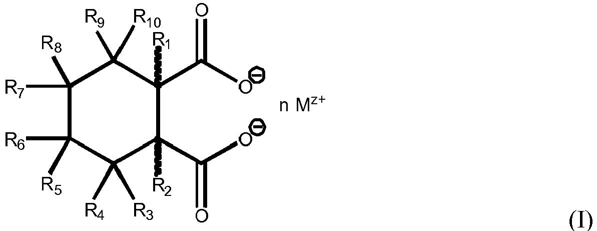
wherein
each of R₁, R₂, R₃, R₄, R₅, R₆, R₇, R₈, R₉ and R₁₀ is hydrogen;
M is calcium;
n is 1;
z is 2;
further comprising 600 to 2500 ppm, most preferably within the range of 650 to 2000 ppm, based on the total amount of the polymer composition of the stearate salt of zinc and/or calcium.

The film as used in the invention comprises one or more layer(s), wherein at least one of the layers consists of the polymer composition according to the present invention. Of course all layers of the film may consist of the polymer composition according to the present invention whereby each layer may be made of the same or different compositions according to the present invention.

In case of a multi-layer film the film usually comprises not more than 5 layers.

In one embodiment of the present invention the film is a mono-layer film.

In another embodiment the film is a multi-layer film wherein at least one of the layers consists of the polymer composition in the film used according to the present invention. This multi-layer film may comprise up to five layers, preferably up to three layers.

The total thickness of the film comprising one or more layer(s) is preferably within the range of 10 to 400 µm, more preferably within the range of 30 to 300 µm and most preferably within the range of 50 to 250 µm.

The film has a hemispherical PAR transmittance of at least 80 %, preferably at least 81 % and most preferably at least 82 %.

The film has an F-scatter value of not more than 64%, preferably not more than 60%, more preferably not more than 50 % and even more preferably not more than 40 %. In a preferred embodiment the F-scatter value is 25 % or below.

The film preferably has a haze of not more than 83%, preferably not more than 75%, more preferably not more than 65 % and even more preferably not more than 55 %.

The film used in the present invention is preferably free from fillers.

The film may be prepared by methods usual in the art, e.g. casting or blow-extrusion, the latter being preferred.

The preferred blow-extrusion process is described in the following.
Films are produced by extrusion through an annular die with a pressure difference applied to blow the extruded cylinder into a film and achieve the desired orientation within the film, i.e. to build a stress into the cooled film.

The components of the film, e.g. the LLDPE, the compound according to formula (I) and the fatty acid salt, if present, are typically intimately mixed prior to extrusion and blowing of the film, as is well known in the art. It is especially preferred to thoroughly blend the components, for example using a twin screw extruder, preferably a counter-rotating extruder prior to extrusion and film blowing.

Typically, the compositions constituting the layers of the film will be blown i.e. (co)extruded at a temperature in the range 160°C to 240°C, and cooled by blowing gas (generally air) at a temperature of 10 to 50°C to provide a frost line height of 1 to 8 times the diameter of the die, preferably 2 to 6 times the diameter of the die. The blowing up ratio should generally be in the range 1.2 to 6, preferably 1.5 to 4.

Suitable film-forming processes are for example described in EP-A-299750.

The film-forming process steps of the invention are known and may be carried out in one film line in a manner known in the art. Such film lines are commercially available.

The film, preferably the blown film used in the present invention has preferably not been subjected to a subsequent stretching step.

The use of the film according to the present invention is as agricultural film, preferably as greenhouse film

Features of the polymer composition and the film as described above including all preferred embodiments thereof are also preferred features of the uses according to the present invention.

The invention will now be described by the following non-limiting examples.

### Experimental part

### Measurement methods

### Density

Density of the materials is measured according to ISO 1183: 1987 (E), method D, with isopropanol-water as gradient liquid. The cooling rate of the plaques when crystallising the samples was 15 °C/min. Conditioning time was 16 hours.

### Melt flow rate MFR

The melt flow rate (MFR) is determined according to ISO 1133 and is indicated in g/10 min. The MFR is an indication of the melt viscosity of the polymer. The MFR of polyethylene is determined at 190°C. The load under which the melt flow rate is determined is usually indicated as a subscript, for instance MFR₂ is measured under 2.16 kg load, MFR₅ is measured under 5.00 kg load or MFR₂₁ is measured under 21.6 kg load.

### Weight average molecular weight M_{w} and molecular weight distribution MWD

The weight average molecular weight Mw and the molecular weight distribution (MWD = Mw/Mn wherein Mn is the number average molecular weight and Mw is the weight average molecular weight) is measured by a method based on ISO 16014-4:2003. A Waters 150CV plus instrument, equipped with refractive index detector and online viscosimeter was used with 3 x HT6E styragel columns from Waters (styrene-divinylbenzene) and 1,2,4-trichlorobenzene (TCB, stabilized with 250 mg/L 2,6-Di tert butyl-4-methyl-phenol) as solvent at 140°C and at a constant flow rate of 1 mL/min. 500 µl of sample solution were injected per analysis. The column set was calibrated using universal calibration (according to ISO 16014- 2:2003) with 10 narrow MWD polystyrene (PS) standards in the range of 1.05 kg/mol to 11 600 kg/mol. Mark Houwink constants were used for polystyrene and polyethylene (K: 19.10⁻³ dL/g and a: 0.655 for PS, and K: 39·10⁻³ dL/g and a: 0.725 for PE). All samples were prepared by dissolving 0.5 - 3.5 mg of polymer in 4 mL (at 140°C) of stabilized TCB (same as mobile phase) and keeping for 2 hours at 140°C and for another 2 hours at 160 °C with occasional shaking prior sampling in into the GPC instrument.

### Comonomer content

13 C-NMR spectra were recorded on Bruker 400 MHz spectrometer at 130°C from samples dissolved in 1, 2, 4-trichlorobenzene/benzene-d6 (90/10 w/w). Conversion between %wt and %mol can be carried out by calculation.

### Gloss

The gloss has been determined according to ISO 2813 at angles of 20°, 60° and 85°.

### Haze, F-scatter value and Hemispherical PAR transmission

These haze, F-scatter value and Hemispherical PAR transmission were determined using the apparatus and methods described in S.Hemming, G.L.A.M. Swinkels, A.J. van Breugel, V Mohammadkhani, "Evaluation of diffusing properties of greenhouse covering materials, Acta Horticulturae, Acta Hort. (ISHS) 1134:309-316 (May 2016) and *inter alia* referring to
- S. Hemming, T. Dueck, J. Janse and F. van Noort, "The Effect of Diffuse Light on Crops", Proc. IS on Greensys2007, Acta Hort. 801, ISHS 2008, p. 1293 - 1300;
- G.L.A.M. Swinkels, "Transvision:a Light Transmission Measurement System for Greenhouse Covering Materials", Proc. 7th IS on Light in Horticultural Systems, Acta Hort. 956, ISHS 2012, p. 563-568;
- J. Nijskens, J. Deltour, S. Coutisse and A. Nisen, "Radiation transfer through covering materials, solar and thermal screens of greenhouses", Agricultural and Forest Meterology, 35 (1985), p. 229-242;

### Used material:

LLDPE: a bimodal linear low density polyethylene having a density of 923 kg/m³, a melt flow rate MFR₂ (ISO 1133, 190°C, 2.16 kg load) of 0.25 g/10 min and an MFR₂₁ (ISO 1133, 190°C, 21.6 kg load) of 22 g/10 min containing an antioxidant and anti-blocking agent. The weight average molecular weight M_{w} is 206000 and the molecular weight distribution MWD is 16.2

The polymer was produced using a catalyst which was prepared as follows.

### Complex preparation:

87 kg of toluene was added into the reactor. Then 45.5 kg Bomag A in heptane was also added in the reactor. 161 kg 99.8 % 2-ethyl-1-hexanol was then introduced into the reactor at a flow rate of 24-40 kg/h. The molar ratio between BOMAG-A and 2-ethyl-1-hexanol was 1:1.83.

### Solid catalyst component preparation:

275 kg silica (ES747JR of Crossfield, having average particle size of 20 µm) activated at 600°C in nitrogen was charged into a catalyst preparation reactor. Then, 411 kg 20 % EADC (2.0 mmol/g silica) diluted in 555 litres pentane was added into the reactor at ambient temperature during one hour. The temperature was then increased to 35°C while stirring the treated silica for one hour. The silica was dried at 50 °C for 8.5 hours. Then 655 kg of the complex prepared as described above (2 mmol Mg/g silica) was added at 23°C during ten minutes. 86 kg pentane was added into the reactor at 22°C during ten minutes. The slurry was stirred for 8 hours at 50 °C. Finally, 52 kg TiCl₄ was added during 0.5 hours at 45°C. The slurry was stirred at 40 °C for five hours. The catalyst was then dried by purging with nitrogen.

The catalyst was then prepolymerised using ethylene whereby the prepolymerised material had an MFR₂ of 10 g/10 min.

The polymerisation was carried out as follows.

| **loop reactor** | |
|---|---|
| split [wt.%] | 40 |
| catalyst amount kg/hr | 1.6 |
| temperature [°C] | 85 |
| residence time [hr] | 1.2-1.3 |
| H2/C2 ratio [mol/kmol] | 370 |
| C4/C2 ratio [mol/kmol] | 550 |
| MFR₂ [g/10 min] | 300 |

| **GPR** | |
|---|---|
| split [wt.%] | 60 |
| temperature [°C] | 80 |
| residence time [hr] | 2-2.5 |
| H2/C2 ratio [mol/kmol] | 9-10 |
| C4/C2 ratio [mol/kmol] | 700-720 |
| MFR₂ [g/10 min] | 0.25 |
| MFR₅ [g/10 min] | 1.05 |
| MFR₂₁ [g/10 min] | 22 |

HPN-20E: a mixture of 66 wt.% Calcium (1R, 2S)-cyclohexanedicarboxylate and 34 wt.% Zinc stearate, obtainable from Milliken.

The LLDPE and HPN-20E were dry-mixed in the desired weight ratio and films were produced on a coextrusion film blowing line (obtained from DR. COLLIN GMBH). The blow-up ratio (BUR) was 3, the die diameter 60 mm and the die gap 1.2 mm. For the 40 µm monolayer films, a frost line height of 4 times the die diameter, and for the 80 µm monolayer films, a frost line height of 3 times the die diameter was employed. The results are given in the tables below. As can be seen from the table, the hemispherical PAR transmittance is improved by up to 3 percentage points which has a high value in case of agricultural films.

| | REF1 | IE4 | IE5 | IE6 | IE7 | REF2 | IE11 | IE12 | IE13 | 1E4 |
|---|---|---|---|---|---|---|---|---|---|---|
| HPN-20E [ppm] | 0 | 2000 | 3000 | 4000 | 5000 | 0 | 2000 | 3000 | 4000 | 5000 |
| film thickness [µm] | 40 | 40 | 40 | 40 | 40 | 80 | 80 | 80 | 80 | 80 |
| haze [%] | 85 | 64 | 60 | 52 | 42 | 86 | 75 | 60 | 52 | 45 |
| gloss at 20° | 0.5 | n.d. | 1.7 | 2.1 | 4.4 | 0.6 | n.d. | 1.7 | 2.7 | 4.4 |
| gloss at 60° | 8.9 | n.d. | 24.8 | 28.8 | 42.7 | 9.2 | n.d. | 23.3 | 32.6 | 41.9 |
| gloss at 85° | 56 | n.d. | 81.1 | 82.2 | 85.8 | 58.8 | n.d. | 78.6 | 81.7 | 83 |
| F-scatter [%] | 65 | 41 | 37 | 29 | 20 | 66 | 53 | 38 | 30 | 22 |
| hemispherical transmittance [%] | 79.8 | 81.9 | 81.9 | 82.1 | 82.4 | 79.4 | 80.3 | 80.0 | 81.3 | 81.6 |

| | | | | | | | | | | |
|---|---|---|---|---|---|---|---|---|---|---|
| n.d. not determined | | | | | | | | | | |

## Claims

1. A use of a film comprising one or more layer(s), wherein at least one of the layers consists of a polymer composition comprising
a) a bi- or multimodal LLDPE
b) a compound according to the following formula (I) 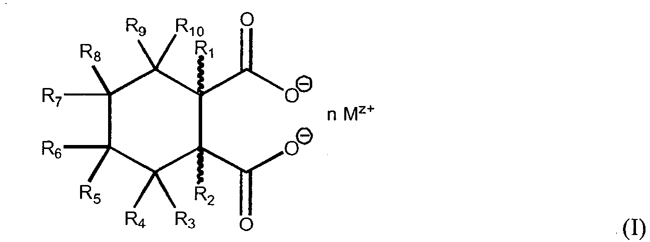 wherein
each of R₁, R₂, R₃, R₄, R₅, R₆, R₇, R₈, R₉ and R₁₀ is independently selected from hydrogen and a C₁ to C₁₀ hydrocarbyl group;
whereby two of R₃ to R₁₀ located on adjacent carbon atoms may be fused to form a cyclic hydrocarbyl structure;
M is selected from the groups consisting of calcium, strontium, lithium, zinc, magnesium and monobasic aluminium;
n is 1 or 2;
z is 1 or 2;
the sum of n+z is 3,
wherein the film has a hemispherical PAR transmittance of at least 80% and a F-scatter value of not more than 64%,
as agricultural film.

2. The use according to claim 1, wherein the amount of compounds according to formula (I) is within the range of 500 to 10000 ppm based on the total amount of the polymer composition.

3. The use according to any one of the preceding claims, wherein the density of the bi- or multimodal LLDPE is 940 kg/m³ or less.

4. The use according to any one of the preceding claims, wherein the comonomer(s) of the bi- or multimodal LLDPE is/are selected from C₄ to C₂₀ alpha olefins.

5. The use according to any one of the preceding claims further comprising a fatty acid salt.

6. The use according to claim 5, wherein the fatty acid salt is selected from fatty acid salts of a metal.

7. The use according to any one of the preceding claims, wherein the agricultural film is a greenhouse film.

8. The use according to any one of the preceding claims wherein the film is a mono-layer film or a multi-layer film wherein at least one of the layers consist of the polymer composition and wherein the film comprising one or more layer(s) has a total thickness within the range of 10 to 400 µm.

## Patentansprüche

1. Verwendung einer Folie, umfassend eine oder mehrere Schicht(en), wobei mindestens eine der Schichten aus einer Polymerzusammensetzung besteht, umfassend
a) ein bi- oder multimodales LLDPE
b) eine Verbindung gemäß der nachstehenden Formel (I) 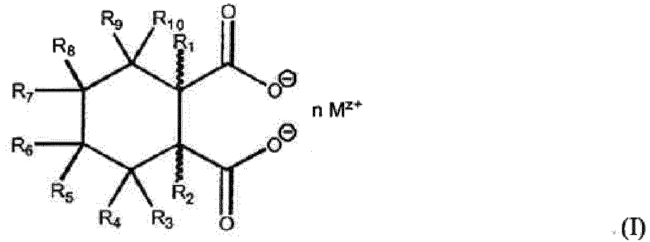 worin
jedes von R₁, R₂, R₃, R₄, R₅, R₆, R₇, R₈, R₉ und R₁₀ unabhängig aus Wasserstoff und einer C₁- bis C₁₀-Kohlenwasserstoffgruppe ausgewählt ist;
wobei zwei von R₃ bis R₁₀, die sich an benachbarten Kohlenstoffatomen befinden, verbunden sein können, um eine cyclische Kohlenwasserstoffstruktur zu bilden;
M aus den Gruppen, bestehend aus Calcium, Strontium, Lithium, Zink, Magnesium und einbasigem Aluminium, ausgewählt ist;
n 1 oder 2 ist;
z 1 oder 2 ist;
die Summe von n+z 3 ist,
wobei die Folie eine halbkugelförmige PAR-Durchlässigkeit von mindestens 80 % und einen F-Streuungswert von nicht mehr als 64 % aufweist,
als landwirtschaftliche Folie.

2. Verwendung nach Anspruch 1, wobei die Menge der Verbindungen gemäß Formel (I) im Bereich von 500 bis 10000 ppm, bezogen auf die Gesamtmenge der Polymerzusammensetzung, liegt.

3. Verwendung nach einem der vorangehenden Ansprüche, wobei die Dichte des bi- oder multimodalen LLDPE 940 kg/m³ oder weniger beträgt.

4. Verwendung nach einem der vorangehenden Ansprüche, wobei das/die Comonomer(e) des bi- oder multimodalen LLDPE aus C₄- bis C₂₀-alpha-Olefinen ausgewählt ist/sind.

5. Verwendung nach einem der vorangehenden Ansprüche, weiter umfassend ein Fettsäuresalz.

6. Verwendung nach Anspruch 5, wobei das Fettsäuresalz aus Fettsäuresalzen eines Metalls ausgewählt ist.

7. Verwendung nach einem der vorangehenden Ansprüche, wobei die landwirtschaftliche Folie eine Gewächshausfolie ist.

8. Verwendung nach einem der vorangehenden Ansprüche, wobei die Folie eine einschichtige Folie oder eine mehrschichtige Folie ist, wobei mindestens eine der Schichten aus der Polymerzusammensetzung besteht und wobei die eine oder mehrere Schicht(en) umfassende Folie eine Gesamtdicke im Bereich von 10 bis 400 µm aufweist.

## Revendications

1. Utilisation d'un film comprenant une ou plusieurs couches, dans lequel au moins une des couches consiste en une composition de polymère comprenant
a) un LLDPE bi- ou multi-modal
b) un composé de formule (I) suivante 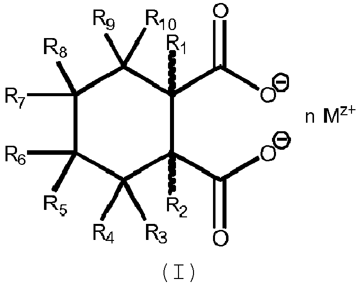 dans laquelle
chacun de R₁, R₂, R₃, R₄, R₅, R₆, R₇, R₈, R₉ et R₁₀ est indépendamment choisi parmi l'hydrogène et un groupe hydrocarbyle en C₁ à C₁₀ ;
moyennant quoi deux parmi R₃ à R₁₀ situés sur des atomes de carbone adjacents peuvent être condensés pour former une structure d'hydrocarbyle cyclique ;
M est choisi parmi les groupes consistant en calcium, strontium, lithium, zinc, magnésium et aluminium monobasique ;
n est 1 ou 2 ;
z est 1 ou 2 ;
la somme n + z est de 3,
dans laquelle le film a un coefficient de transmission PAR hémisphérique d'au moins 80 % et une valeur de diffusion F non supérieure à 64 %,
en tant que film pour l'agriculture.

2. Utilisation selon la revendication 1, dans laquelle la quantité de composés de formule (I) est dans la plage de 500 à 10 000 ppm, basée sur la quantité totale de la composition de polymère.

3. Utilisation selon l'une quelconque des revendications précédentes, dans laquelle la masse volumique du LLDPE bi- ou multi-modal est de 940 kg/m³ ou moins.

4. Utilisation selon l'une quelconque des revendications précédentes, dans laquelle le ou les comonomères du LLDPE bi- ou multi-modal sont choisis parmi les alpha-oléfines en C₄ à C₂₀.

5. Utilisation selon l'une quelconque des revendications précédentes, comprenant en outre un sel d'acide gras.

6. Utilisation selon la revendication 5, dans laquelle le sel d'acide gras est choisi parmi les sels métalliques d'acide gras.

7. Utilisation selon l'une quelconque des revendications précédentes, dans laquelle le film pour l'agriculture est un film pour serre.

8. Utilisation selon l'une quelconque des revendications précédentes, dans laquelle le film est un film monocouche ou un film multicouches dont au moins une des couches consiste en la composition de polymère, et dans laquelle le film comprenant une ou plusieurs couches a une épaisseur totale dans la plage de 10 à 400 µm.
